# FASCICULE DE BREVET EUROPEEN

(11) **EP 3 186 861 B1**
(45) Date de publication et mention de la délivrance du brevet: **19.09.2018**
(21) Numéro de dépôt: 15756964.1
(22) Date de dépôt: 16.07.2015
(51) Int. Cl.: H02G 3/04

(54) **COLONNE TECHNIQUE POUR ENSEMBLE MODULAIRE DE CONSTRUCTION, NOTAMMENT POUR ÉQUIPER UN ESPACE D'EXPOSITION**
VERSORGUNGSSÄULE FÜR MODULAREN AUFBAU, FÜR MESSESTÄNDE
SERVICE POLE FOR MODULAR ASSEMBLY, FOR FAIRS

(30) Priorité: 17.07.2014 FR 1456866
(43) Date de publication de la demande: 05.07.2017
(73) Titulaire: Cube Technologies, 69570 Dardilly (FR)
(72) Inventeur: LAURENT, François, F-Quincieux 69650 (FR); RUBY, Vincent, F-69600 Oullins (FR); BRIEL, Christophe, F-69130 Ecully (FR); DEVILLE, Laurent, F-69009 Lyon (FR)
(74) Mandataire: Schmidt, Martin Peter
(86) Numéro de dépôt international: PCT/FR2015/051939
(87) Numéro de publication internationale: WO 2016/009144

(56) Documents cités:
- EP-A1- 1 172 910
- WO-A2-2004/008911
- DE-A1-102010 000 207
- DE-U1- 9 404 365
- FR-A1- 2 727 577
- US-A- 4 625 633
- US-A- 5 195 286

## Description

### Domaine technique de l'invention

L'invention concerne le domaine des ensembles modulaires équipés d'appareils de commande, de gestion et de distribution d'énergie, d'informations, de produits et/ou de services à des usagers. Elle concerne plus particulièrement des ensembles modulaires conçus pour équiper des espaces d'exposition dans des halls d'exposition et pour permettre aux occupants temporaires de ces espaces (stands) d'exposition de se connecter aux réseaux électriques ou électroniques de distribution d'énergie, de services et d'informations.

### Etat de la technique

Un hall d'exposition est un espace couvert présentant une dalle (sol) de grande surface. Ce sol comprend un réseau de fosses ou caniveaux techniques dans lesquels circulent des câbles de différentes natures (notamment électricité, réseau informatique, téléphone). Ce réseau de fosses ou caniveaux techniques comprend un grand nombre d'unités de branchement aménagées dans le sol et reparties sur la dalle, qui sont recouvertes lorsqu'elles ne sont pas utilisées, pour ne pas gêner la circulation des piétons et chariots. Les stands d'exposition sont installés avant le début de chaque exposition et démontés après sa clôture. Classiquement on distingue deux types de stands ; les stands « déco » fabriqués sur mesure par des concepteurs-designers de stands et les stands « modulaires » standardisés, de plus petite taille, pouvant accueillir tout type d'exposants. La plupart du temps, ces derniers sont réalisés à la demande de l'exploitant du hall d'exposition par un prestataire d'installation générale. Les stands modulaires sont assemblés et montés en utilisant des structures normalisées comprenant des poteaux multi-départs, qui sont typiquement des profilés extrudés en aluminium présentant des rainures longitudinales, et des éléments de cloison, typiquement des panneaux rectangulaires en bois mélaminés. Pour former une cloison verticale de longueur unitaire on monte deux poteaux verticaux dont la base repose sur la dalle, on les relie à leur base par une traverse horizontale, qui est un profilé métallique, on insère le panneau vertical dans une rainure longitudinale de chacun des poteaux, de manière à ce que la base du panneau repose dans la traverse horizontale puis on les relie en partie haute par une deuxième traverse de façon à créer un ensemble rigide. Cet ensemble élémentaire composé par un panneau, de deux poteaux et de deux traverses, dont la longueur typique est d'environ un mètre et dont la hauteur est typiquement d'environ 2,5 mètres, peut être multiplié pour créer des cloisons de longueur voulue. Ainsi on peut subdiviser l'espace du hall d'exposition en stands individuels, faciles à monter, faciles à modifier et faciles à démonter. Les poteaux, traverses et cloisons peuvent être de forme, de longueur, d'épaisseur et de hauteurs différentes. Il reste à gérer le problème du branchement de chaque stand aux différents réseaux câblés.

Sur la plupart des petits stands d'exposition, les exposants ont simplement besoin d'une ou plusieurs prises de courant afin de pouvoir raccorder l'éclairage du stand (typiquement un rail de spots), leur ordinateur portable, leur chargeur de téléphone, et éventuellement une imprimante et un réfrigérateur.
Il est connu d'utiliser pour ces types de stands des boitiers comportant une pluralité de prises pour se raccorder au réseau électrique fourni à l'exposant. Ces boitiers sont raccordés aux unités de branchement aménagées dans le sol du hall d'exposition. Le document FR 2 727 577 A1 divulgue une colonne technique dans laquelle passe une pluralité de câbles électriques, informatiques et téléphoniques. La colonne est pourvue d'une ouverture longitudinale apte à recevoir les prises pour brancher des appareils. Le document EP 1 172 910 A1 décrit une colonne pour le support d'appareillages de commande et/ou de distribution d'énergie et de cheminement de câbles comportant une ossature présentant des ailes disposées en étoile qui délimitent deux à deux des goulottes. La colonne technique est fixée au sol au moyen d'un socle qui est recouvert d'un cache de finition en forme de coupelle. Ces colonnes techniques, bien que parfaitement adaptable dans des emplacements pour expositions, présentent l'inconvénient d'être très encombrante, ce qui est très défavorable pour des stands de petites surfaces.

D'autres systèmes de branchements électriques existent, et sont adaptés aux sites d'exposition qui offrent, outre un branchement aisé aux différents services proposés (courant électrique, ligne téléphonique, accès internet) la possibilité d'un paramétrage automatique ou semi-automatique selon la commande de l'exposant. Ce système se présente sous la forme d'un coffret électrique intelligent intégrant, outre les composants électriques traditionnels (prises, protections), une partie électronique de contrôle et de communication. Selon les règles en vigueur dans les établissements recevant du public (ERP type T), chaque stand d'exposition doit comprendre un organe de coupure de l'alimentation électrique, typiquement un coffret électrique dédié. Un tel système est commercialisé sous la marque KEOPS par la société Cube Technologies ; il est décrit dans la demande de brevet WO 03/060840 A1. Ce système satisfait les besoins des utilisateurs comme des exploitants de centres d'exposition.

Cependant, ce coffret électrique intelligent ainsi que d'autres produits similaires, bien que présentant de nombreuses caractéristiques avantageuses, pose encore certains problèmes, et reste parfois perfectible, pour son utilisation notamment sur les stands modulaires de petites tailles. Ce type de coffret électrique possède sa propre électronique de contrôle et est souvent capable de distribuer des puissances bien supérieures aux demandes des exposants de ces types de stands. Le coffret électrique intelligent est donc est assez lourd, assez encombrant, assez coûteux, et dans la mesure où chaque stand d'exposition dans un hall d'exposition doit être équipé d'un tel coffret les exposants réclament depuis de nombreuses années un produit plus adapté à leur besoin.

De plus, le besoin électrique pour un stand d'exposition donné, et cela notamment pour les petits stands d'exposition, i.e. dont la surface est comprise entre 9 et 16 m², ne dépasse pas souvent de nos jours une puissance de l'ordre de 1 kW (ce qui est en partie lié à la disponibilité de systèmes d'éclairage de basse consommation). Or, beaucoup de sites d'exposition proposent un branchement électrique standard de 3 kW, surdimensionné et trop onéreux. En effet, l'arrivée de technologies d'éclairage à basse consommation accentue encore plus ce surdimensionnement. Le consommateur qui investit dans ces équipements de basse consommation souhaite une facturation transparente de sa consommation électrique qui lui permet de valoriser son investissement. La facturation forfaitaire proposée par la plupart des gestionnaires de sites d'expositions ne répond pas à ce besoin. En revanche, elle ne nécessite pas de relevé individuel de la consommation, sachant que l'établissement d'un tel relevé individuel complique la gestion des centres d'exposition.

Un but de la présente invention est de remédier aux inconvénients précités, notamment en fournissant une colonne technique pour le support d'appareillages qui soit aussi compacte que possible, de manière à ne pas occuper trop de surface au sol sur le stand d'exposition.

Un autre but de la présente invention est de fournir une colonne technique permettant de simplifier le branchement électrique des stands d'exposition par les équipes d'installation.

Un autre but de la présente invention est de fournir une colonne technique qui soit facile à fabriquer, avec un coût de fabrication restreint.

Un autre but de la présente invention est de fournir une colonne technique amovible, aisément transportable, et suffisamment stable au sol.

Un autre but de la présente invention est de fournir une colonne technique qui soit facile d'utilisation, et adaptable à tout type de matériel existant, notamment adaptable aux principaux types de structures modulaires utilisés dans les stands d'exposition, et notamment à toutes les tailles de traverses et de cloisons typiquement utilisée par les gestionnaires de sites ou les prestataires d'installation générale.

Un autre but selon l'invention est de fournir une colonne permettant de moduler, de contrôler et d'adapter la consommation énergétique nécessaire à un stand d'exposition en fonction de plusieurs paramètres, tels que la surface d'expositions disponible, le nombre d'appareils électriques en marche, ou encore la puissance électrique requise.

### Objets de l'invention

Selon l'invention, le problème est résolu en proposant une colonne technique commune à plusieurs stands contigus, qui présente une façade individuelle pour chaque stand avec ses moyens de branchement, et qui présente pour chaque stand un système électronique de gestion et de distribution.

A cette fin, la colonne technique selon l'invention intègre un poteau central multi-départ de type connu. Cette solution entraine une contrainte lorsque les cloisons qui s'intègrent dans les rainures du poteau multi-départ vont compartimenter l'intérieur de la colonne technique. Afin de pouvoir intégrer les différents systèmes électriques de gestion et de distribution dans la colonne technique, il est nécessaire de pouvoir faire passer les connexions filaires (câbles) contenues dans la colonne entre les différents compartiments (appelés aussi segments) de la colonne qui sont séparées par les cloisons. Les inventeurs ont constaté qu'il est très difficile de conduire la traverse jusqu'au centre du poteau central car ainsi il ne reste plus de place pour le passage des câbles, ce qui est incompatible avec le but de n'utiliser qu'une seule unité de branchement pour le dispositif desservant deux ou quatre stands. En effet, à l'intérieur du dispositif les câbles ne pourraient passer qu'entre le sol et le bord inférieur de la traverse. Cet espacement est faible, typiquement de l'ordre de 19 mm. Si l'on souhaite rendre le dispositif transportable à l'aide de roulettes, l'espacement entre le rebord inférieur du socle et le bord inférieur de la traverse devra être diminué encore plus (à moins de prévoir des roulettes escamotables). De toute manière il n'est pas souhaitable que le socle du dispositif repose directement sur le sol à cause du risque électrique lié au dispersement accidentel de liquides sur le sol (bouteilles de boisson renversées) et à cause de l'accumulation de poussière à même le sol. Il y a donc une réelle difficulté à prévoir le passage des câbles si tous les buts du dispositif doivent être atteints simultanément.

Selon l'invention ce problème a été résolu en utilisant une traverse inférieure raccourcie. Ainsi, de manière connue, l'ensemble monté laisse un espace libre entre le bord de la traverse raccourcie et le poteau central. Cet espace est suffisant pour permettre le passage de câbles à l'intérieur du dispositif. Lesdits câbles sont protégés par des passe-câbles, typiquement en tôle pliée et soudés sur le socle. Selon le réglage fin de la hauteur de la traverse la cloison peut reposer également sur la face supérieure desdits passe-câbles, ou il peut y avoir un petit espace entre le bord inférieur de la cloison et la face supérieure du passe-câbles.

Cette solution oblige donc l'utilisation de traverses basses non standards qui se distinguent des traverses standards par leur longueur plus courte. L'utilisation du dispositif nécessiterait donc que le prestataire d'installation générale possède en stock deux types de traverses afin de disposer en temps voulu des traverses basses spécifiques qui forment le départ des poteaux centraux. L'utilisation lors du montage des stands de traverses non standards à côté de traverses standards n'est pas pratique.

Les inventeurs ont résolu ce problème en intégrant les traverses non standards dans le dispositif lui-même ; les traverses non standard n'ont pas besoin d'être détachées du dispositif (ainsi elles ne peuvent pas être égarées). Selon l'invention elles sont fixées de manière escamotable sur le dispositif, afin de ne pas gêner son stockage et son transport, et afin de permettre de n'utiliser qu'un, deux ou trois de traverses, selon les besoins. Par rapport aux traverses standard elles ont été raccourcies ; ainsi elles ne touchent pas le poteau central et ne gênent pas le passage des câbles.

Avantageusement, la hauteur de la colonne technique est telle que les traverses en position escamotées ne dépassent pas en haut. Cela évite à l'utilisateur de s'accrocher à la traverse ; rendre invisibles les traverses escamotées répond également à des critères esthétiques.

Cette manière de résoudre le problème de l'invention soulève cependant un nouveau problème. En effet, il existe plusieurs standards de traverses qui se distinguent légèrement, et la colonne technique selon l'invention devrait pouvoir s'adapter à ces différents standards sans avoir à échanger la traverse escamotable contre une autre. Plus précisément, il existe actuellement trois longueurs standards de traverses : 940 mm, 945 mm et 954 mm, pour un espacement des poteaux d'environ 1 m. Par ailleurs, il existe deux hauteurs différentes : 45 mm et 60 mm.

Selon un mode de réalisation avantageux de l'invention la colonne technique selon l'invention est munie d'un système d'adaptation aux différentes longueurs et/ou hauteurs de traverses. Dans un mode de réalisation préféré ce système d'adaptation aux différentes longueur et/ou hauteurs de traverses comprend un système d'articulation et de réglage qui assure cette compatibilité. Plus précisément, ce système comprend une platine de réglage qui coopère avec une pièce en « U » comprenant deux bras parallèles qui prennent ladite platine de réglage en pince. La pièce en « U » est fixée à l'extrémité de la traverse. Ladite platine comprend des évidements dans lesquels s'insère au moins une tige transversale reliée aux deux bras parallèles de la pièce en « U ». Par un mouvement relatif, dans l'axe de la traverse et dans le sens orthogonal à cet axe, on peut ajuster la position de la pièce en « U » par rapport à la platine ; une desdites tiges transversales peut être un boulon permettant de figer la position relative de la platine de réglage et de la pièce en « U ». L'autre extrémité de ladite platine comporte un autre axe transversal permettant d'escamoter ladite platine avec la traverse qui y est attachée par l'intermédiaire de ladite pièce en « U ».

Ainsi un premier objet de la présente invention est une colonne technique pour stands d'exposition formés par des éléments de cloison (appelés ici simplement « cloisons ») maintenues par des poteaux et à leur base par une traverse s'étendant entre deux poteaux au niveau du sol, laquelle colonne comprend un socle comportant des connexions filaires, et une pluralité de façades individuelles comprenant chacune des moyens de gestion et de distribution de produit(s) et/ou de service(s) permettant de distribuer à chaque stand d'un groupe de stands des produits ou services provenant de réseaux de distribution physiques, ladite colonne étant caractérisée en ce qu'elle comprend au moins une traverse, possiblement démontable, solidaire au socle de ladite colonne, laquelle colonne comprenant en outre une ouverture centrale apte à accueillir un poteau central et au moins une fente verticale apte à accueillir une cloison venant en contact avec ledit poteau central et ladite au moins une traverse solidaire au socle, laquelle traverse laissant suffisamment d'espace pour permettre le passage des connexions filaires présentes à l'intérieur de la colonne technique.

Typiquement deux façades sont séparées par une fente. Avantageusement, ladite au moins une traverse est escamotable ; en position escamotée elle se range dans ladite fente verticale.

La colonne technique peut comprendre en outre un système d'adaptation de la longueur et/ou de la hauteur de ladite au moins une traverse.

Dans un mode de réalisation, ce système d'adaptation de la longueur et/ou de la hauteur de ladite au moins une traverse comprend une platine de réglage qui coopère avec une pièce en « U » dont les deux bras parallèles prennent ladite platine de réglage en pince, ladite platine de réglage comprenant deux évidements dans lesquels s'insère au moins une tige transversale reliée aux deux bras parallèles de ladite pièce en « U ». Selon un mode de réalisation de ce système, lesdits deux évidements comprennent une zone centrale allongée comprenant à chacune des deux extrémités une zone périphérique, étant entendu que pour chaque évidement la direction de la zone centrale allongée ne coïncide pas avec celle de chacune des zones périphériques. Ladite platine peut comporter en outre un second axe transversal permettant d'escamoter ladite platine avec ladite au moins une traverse attachée par l'intermédiaire de ladite pièce en « U ».

Avantageusement le socle de ladite colonne comprend des passes-câbles formant des tunnels permettant d'ordonner, de contenir et de faire circuler l'ensemble des connexions filaires présentes à l'intérieur de la colonne technique.

Dans un mode de réalisation, la colonne technique selon l'invention comprend une ossature formée par des closions radiales disposées en étoile et délimitant plusieurs compartiments pour le montage d'un ou plusieurs boitiers d'appareillages électriques.

Chacune des façades de la colonne comprend avantageusement au moins une prise électrique, de préférence deux prises électriques, pour la distribution d'énergie en monophasé, chaque prise étant reliée à un coupe-circuit ou disjoncteur, et au moins une prise de connexion réseau de type DB xx, et/ou RJ45, RJ11.

La colonne technique selon l'invention comprend avantageusement des roulettes pour être aisément transportable. Dans ce même but elle comporte avantageusement une poignée amovible apte à être fixée de manière réversible, ladite poignée étant fixées sur la colonne au moyen d'au moins une bride disposée sur la face interne d'au moins une façade de ladite colonne ; ainsi la colonne peut être transportée sur ses roulettes intégrées.

Dans un mode de réalisation la colonne technique selon l'invention présente une poignée amovible fixée sur une bride à l'aide de pions, lesdits pions étant fixés sur ladite bride, lesdits pions présentant chacun un fût supportant une tête et coopèrent chacun avec une lumière aménagée dans une plaque supportant ladite poignée, ladite lumière présentant un tronçon circulaire de diamètre suffisant pour faire passer la tête dudit pion et un tronçon rectiligne d'un diamètre suffisant pour accueillir le fût dudit pion en bloquant la tête du pion suite à un mouvement de rotation de ladite poignée.

Un autre objet de l'invention est l'utilisation de la colonne technique selon l'invention dans une pièce ou une salle, telle qu'un hall d'exposition, séparée par une pluralité de cloisons amovibles soutenues par un poteau central et au moins un poteau périphérique. Dans cette utilisation, ladite colonne technique comporte dans son ouverture centrale un poteau central.

Encore un autre objet de l'invention est un stand d'exposition assemblé à partir d'au moins une colonne technique selon l'invention, une pluralité de cloisons verticales et une pluralité de poteaux, caractérisé en ce que :
- chaque colonne technique comprend dans son ouverture centrale un poteau central, et comprend au moins deux traverses solidaires au socle, et comprend au moins deux fentes verticales aptes à accueillir une cloison venant en contact avec le poteau central,
- au moins deux cloisons verticales traversent chacune une fente verticale de la dite colonne technique et sont solidarisées audit poteau central chacune à une desdites traverses.

Un dernier objet de l'invention est un procédé de montage d'un stand d'exposition comprenant au moins une colonne technique selon l'invention, au moins un poteau et au moins une cloison, ledit procédé comprenant les étapes suivantes :
(a) on positionne ladite colonne technique sur un sol horizontal ;
(b) on positionne un poteau central dans l'ouverture centrale de ladite colonne technique ;
(c) on positionne une cloison dans une fente verticale de la colonne technique et on solidarise ladite cloison audit poteau central et par rapport à la traverse.

Si ladite traverse est dotée d'une rainure horizontale, on positionne à l'étape (c) le chant inférieur de la cloison dans la rainure de la traverse. Si ledit poteau central est doté d'une rainure verticale on positionne l'étape (c) un chant vertical dans une rainure verticale dudit poteau central.

Le poteau central et les cloisons sont de types connus, et pour assembler le stand d'exposition on solidarise ladite cloison par son chant vertical opposé à un deuxième poteau central, de préférence du même type que le premier. Un tel stand d'exposition comprend en règle générale une pluralité de poteaux centraux, une pluralité de cloisons, et au moins une colonne technique selon l'invention.

### Description des figures

La figure 1 illustre la subdivision de l'espace sur la dalle d'un hall d'exposition en stands individuels à l'aide de poteaux et de panneaux ; ces stands sont équipés de colonnes techniques selon l'état de la technique.
La figure 3 montre deux exemples avec des poteaux centraux **21** de type connu, utilisés pour délimiter deux (figure 3a) ou quatre (figure 3b) stands d'exposition à l'aide de cloisons **20**.

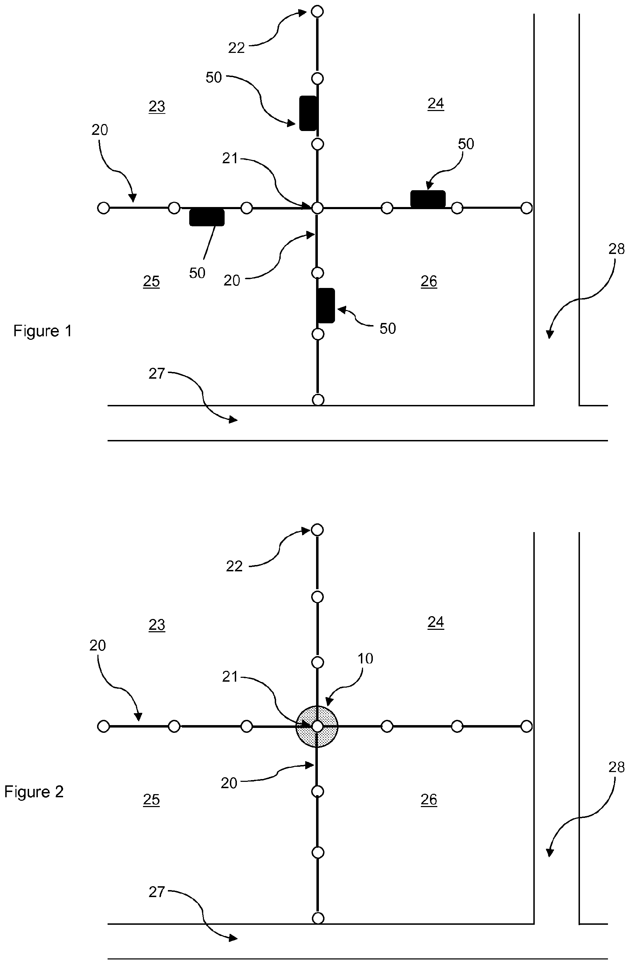

Les figures 2 et 4 à 10 illustrent différents aspects de l'invention.

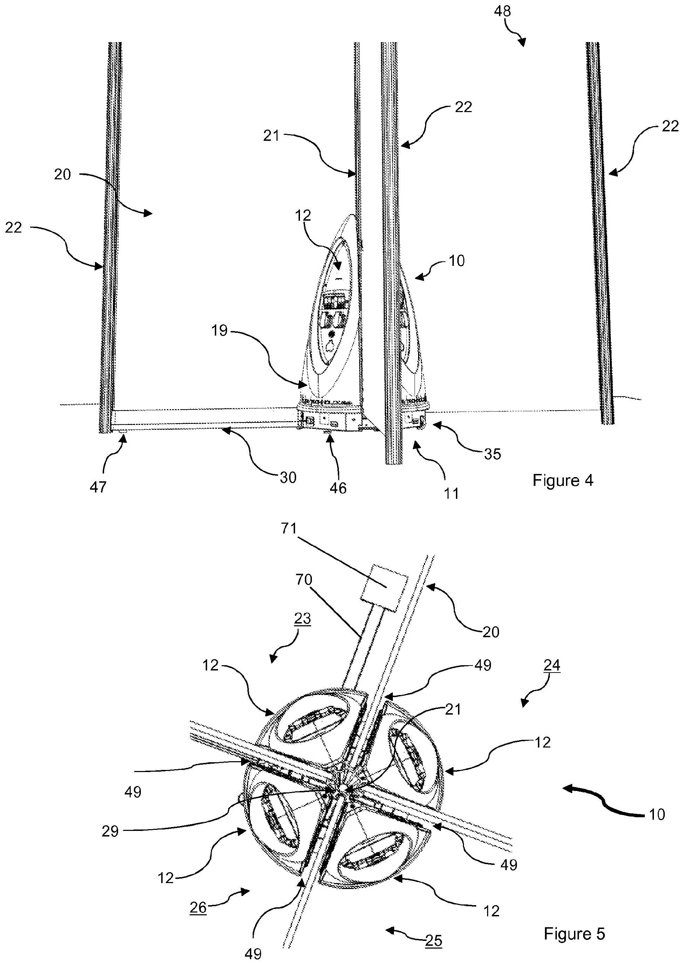

La figure 4 est une représentation en perspective d'une colonne technique **10** selon l'invention installée dans une pièce **100** comportant des cloisons amovibles **20** maintenues par un poteau central **21** et des poteaux périphériques **22**, ainsi que par des traverses escamotables **30** solidaires de la colonne technique **10**.
La figure 5 est une vue de haut de la colonne technique **10** selon l'invention telle que représentée en figure 4. Dans ce mode de réalisation, la colonne technique **10** comporte quatre façades **10**, séparées par des cloisons amovibles **20** formant une pluralité de stands d'exposition **23**, **24**, **25**, **26**, les cloisons amovibles **20** étant ici toutes reliées à un poteau central **21** située dans l'axe transversal de la colonne technique **10**.

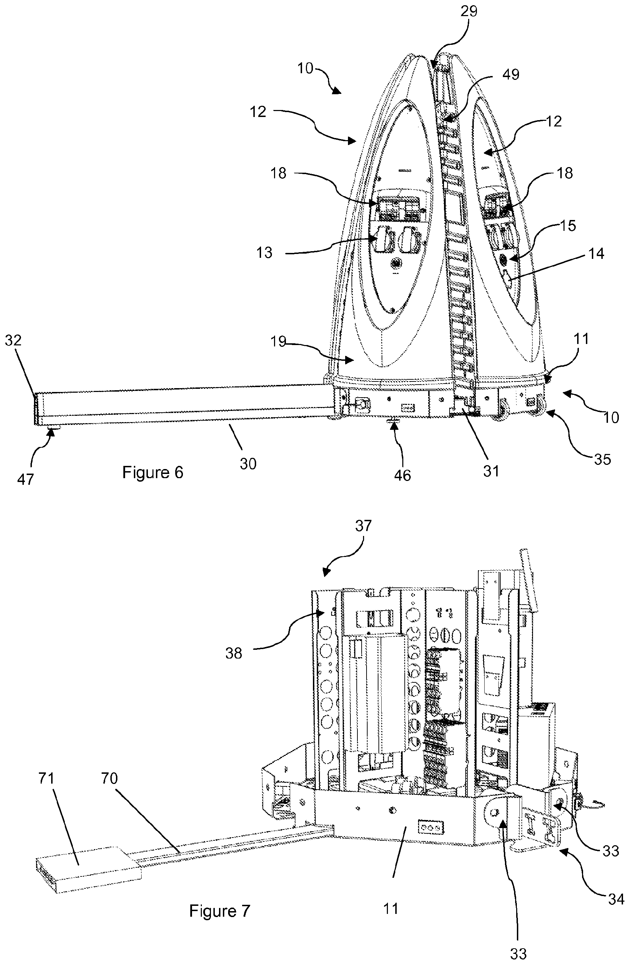

La figure 6 est une vue latérale en perspective de la colonne technique **10** selon l'invention, dans laquelle une traverse escamotable **30** est représentée en position dépliée.

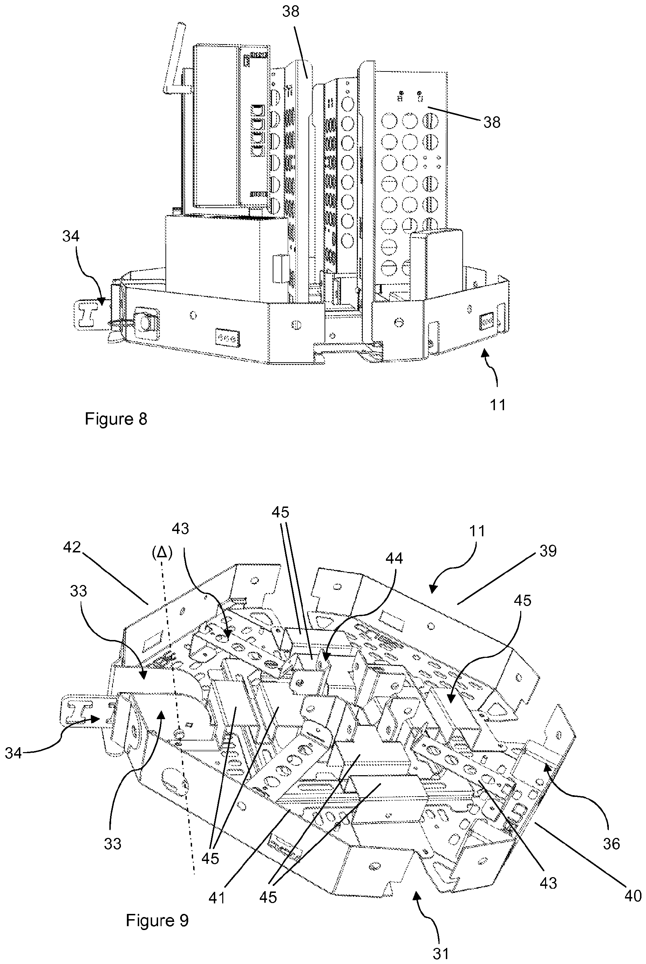

Les figures 7 et 8 représentent deux perspectives de l'ossature **37** de la colonne technique **10** selon l'invention.
La figure 9 est une représentation détaillée du socle **11** de la colonne technique **10** selon l'invention.

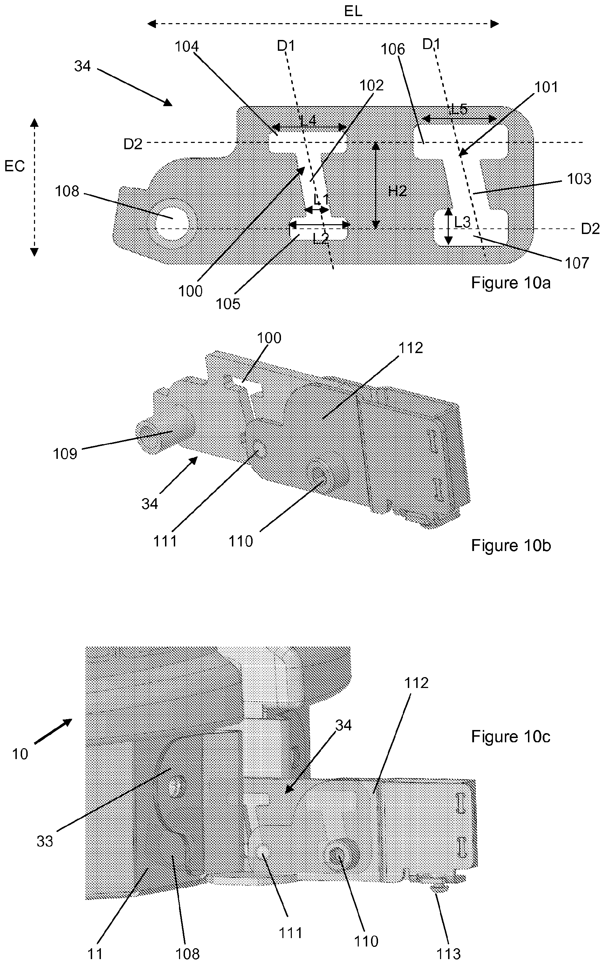

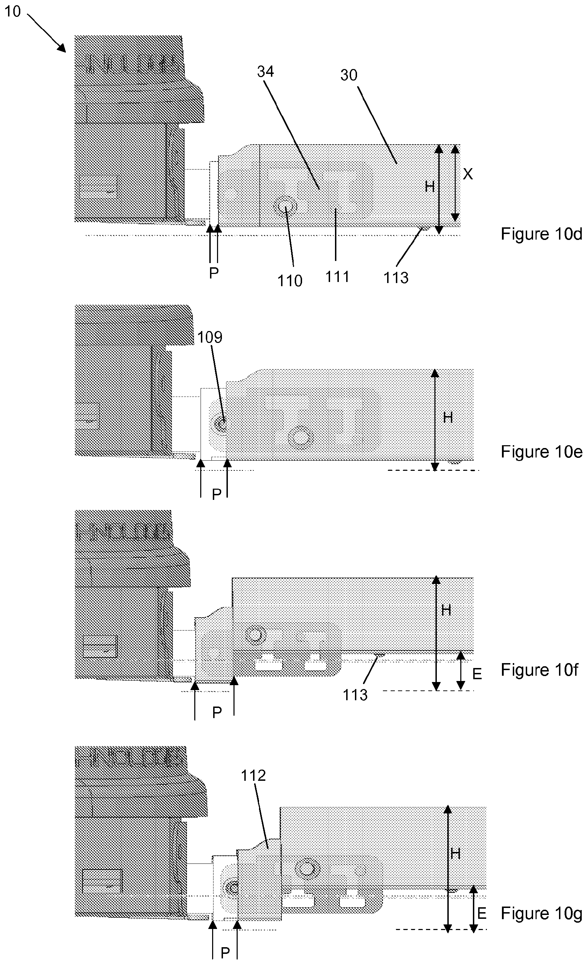

La figure 10 montre en détail la structure de la platine de réglage **34** (Figure 10a), son emboitement dans la pince **112** (Figure 10b), son implantation dans le socle **11** de la colonne technique **10** (Figure 10c) et son fonctionnement pour permettre le réglage de la hauteur et de la longueur de la traverse escamotable **30** (Figures 10d à g).

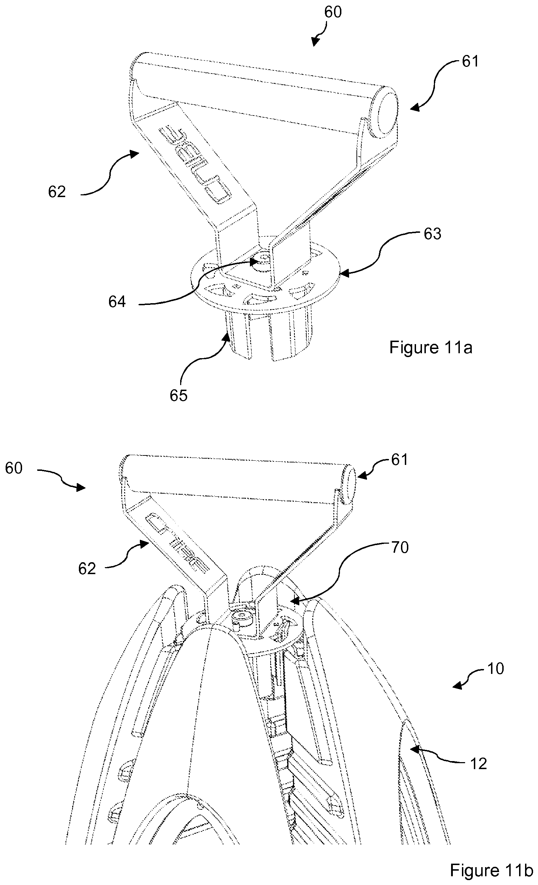

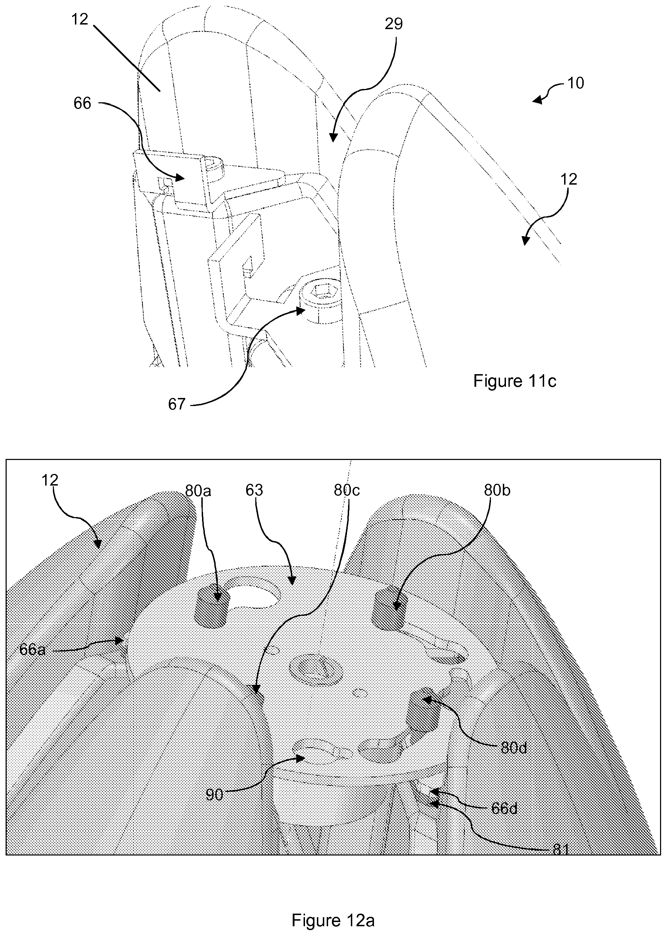

La figure 11 montre en détail la poignée amovible **60** (figure 11a) et son emboitement dans la colonne technique **10** (figure 11b et c).

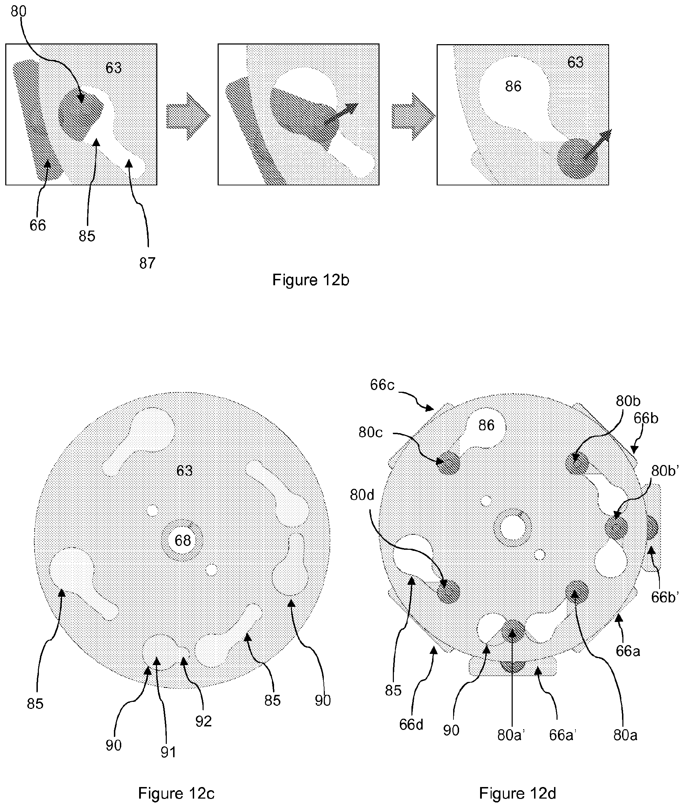

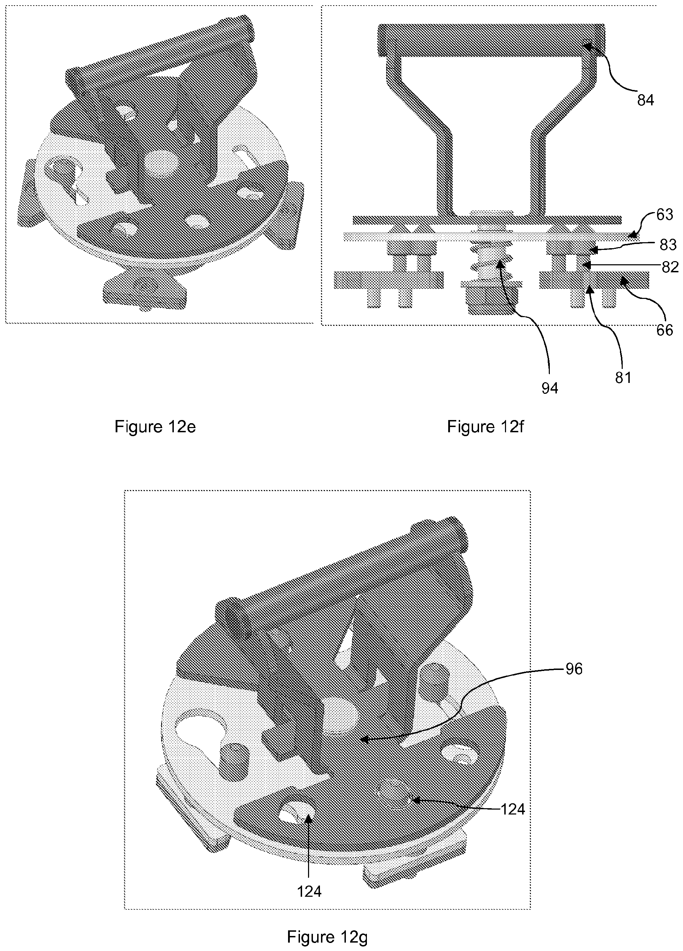

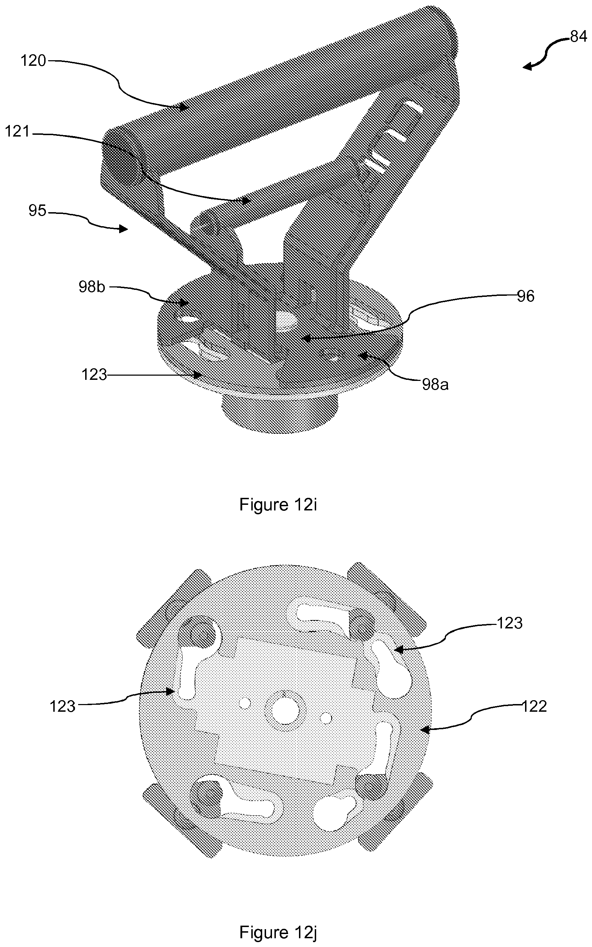

La figure 12 montre un autre mode de réalisation de la poignée amovible.

**Liste des repères utilisés sur les figures :**

| | | | |
|---|---|---|---|
| Colonne technique | **10** | Brides | **66** |
| Socle | **11** | Boulon | **67** |
| Façade | **12** | Orifice central | **68** |
| Prise monophasée | **13** | Gaine de câbles de raccordement | **70** |
| Couvercle | **14** | Boitier de raccordement | **71** |
| Prise de connexion réseau | **15** | Pion | **80** |
| Coupe-circuit (disjoncteur) | **18** | Semelle | **81** |
| Coque | **19** | Fût | **82** |
| Cloison amovible | **20** | Tête | **83** |
| Poteau central | **21** | Poignée | **84** |
| Poteau périphérique | **22** | Lumière principale | **85** |
| Stands | **23,24,25,26** | Tronçon circulaire de 85 | **86** |
| Allée de circulation | **27,28** | Tronçon rectiligne de 85 | **87** |
| Ouverture centrale | **29** | Lumière secondaire | **90** |
| Traverse escamotable | **30** | Tronçon circulaire de 90 | **91** |
| Encoche | **31** | Encoche | **92** |
| Rainure longitudinale | **32** | Tige | **93** |
| Etrier | **33** | Ressort | **94** |
| Platine de réglage | **34** | Organe intermédiaire (tirette) | **95** |
| Roulettes | **35** | Bande centrale de 95 | **96** |
| Corps de support | **36** | Orifice de passage | **97** |
| Ossature | **37** | Plage en arc de cercle de 95 | **98** |
| Pièces de support de cloisons | **43** | Decoupes dans 95 | **99** |
| Equerre de stabilisation | **44** | Evidement | **100, 101** |
| Passe-câble | **45** | Zone centrale de l'évidement | **102, 103** |
| Embase | **46,47** | Zone périphérique | **104,105,106,107** |
| Pièce | **48** | Orifice pour tige 109 | **108** |
| Cloison radiale (voile) | **38** | Tige | **109** |
| Compartiments (ou secteurs) | **39,40,41,42** | Vis de fixation | **110** |
| Fente verticale | **49** | Pion de positionnement | **111** |
| Colonne technique selon état de la technique | **50** | Pince (pièce en « U ») | **112** |
| Poignée amovible | **60** | Fixation antivol | **113** |
| Pièce de préhension | **61** | Organe principal de manutention | **120** |
| Arcea u | **62** | Organe de prise en main secondaire | **121** |
| Plateau circulaire | **63** | Plateau auxiliaire | **122** |
| Boulon | **64** | Echancrure dans 122 | **123** |
| Voiles | **65** | Découpe dans 95 | **124** |

### Description détaillée de l'invention

### 1. Définitions

On entend ici par système électronique de gestion et de distribution, un système de gestion d'informations et de distribution de produit(s) et/ou service(s), installé en règle générale de manière mobile et exploité, de manière permanente, temporaire ou intermittente, sur des sites à variabilité de besoins, nécessitant une pluralité desdits systèmes électroniques de gestion et de distribution formant alors un groupe de systèmes électroniques de gestion et de distribution. Ce groupe de systèmes électroniques de gestion et de distribution permet dès lors de gérer et de distribuer des informations, des produit(s) et/ou service(s) pour une pluralité d'utilisateurs. Préférentiellement, le système électronique de gestion et de distribution possède des moyens de distribution, des moyens de communication, et des moyens d'interaction avec les utilisateurs (clients, locataires du site) et le gestionnaire. Ce système est intégré dans la colonne technique selon l'invention.

On entend ici par moyen de distribution, un ensemble physique permettant de véhiculer ou de fournir les prestations, qui comprend notamment des sorties (connexions, raccords sur réseaux, câbles, tubes, émetteurs, compteurs, éléments de connections et de déconnections).

On entend ici par utilisateur, une personne utilisant un système électronique de gestion et de distribution compris dans la colonne technique selon l'invention. Cet utilisateur est généralement le locataire d'un espace ou d'un stand dans un salon d'exposition, mais il peut aussi s'agir du client locataire de locaux ou d'installations industrielles ou tout autre contexte nécessitant la mise à disposition de produit(s) et/ou service(s) délivrés par réseau(x).

On entend ici par gestionnaire, une ou des personnes ayant en charge l'organisation par exemple d'un site d'exposition ou d'un groupe de locaux en location, ou ayant en charge le bon fonctionnement de systèmes de distribution de produit(s) et/ou service(s) distribués par réseau(x). Le gestionnaire peut avoir la charge de l'installation, de la gestion et de la maintenance.

On entend ici par supports d'informations l'ensemble des moyens permettant de transmettre des informations de gestion du système électronique de gestion et de distribution ou des informations permettant le fonctionnement dudit système et de ses dispositifs multifonctionnels.

### 2. Description détaillée

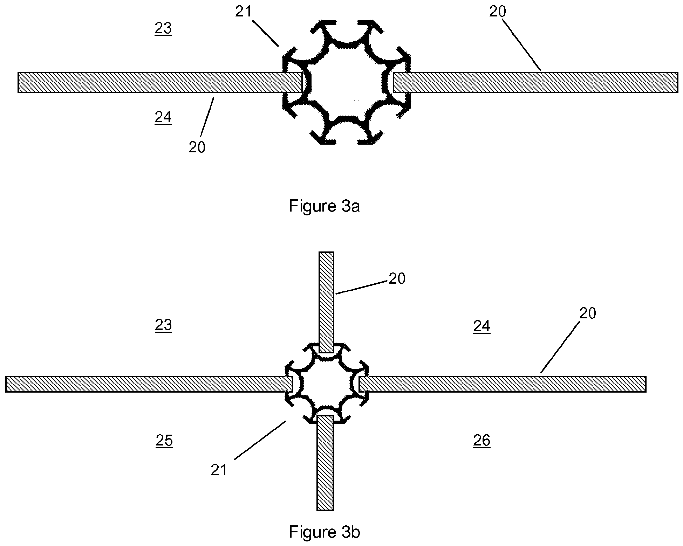

Les figures 1 et 2 montrent de manière schématique le plan de la subdivision d'un hall d'exposition en quatre stands **23**,**24**,**25**,**26** en utilisant une pluralité de poteaux **21**, **22** multi-départ identiques reliés par des cloisons amovibles **20**. Entre chaque ensemble de stands se trouvent les allées de circulation **27**,**28** pour les visiteurs. Selon l'état de la technique représenté sur la figure 1, chaque stand comporte une colonne technique **50** reliée à l'unité de branchement d'un caniveau technique (non montrés sur la figure). Selon l'invention représentée sur la figure 2, une colonne technique **10** est partagée par plusieurs (ici : quatre) stands **23**,**24**,**25**,**26** voisins ; le poteau central **21** traverse ladite colonne technique.
Ce poteau central **21** peut être un poteau multi-départ de type connu. Il peut présenter une pluralité de rainures longitudinales dans lesquelles on peut insérer des cloisons amovibles **20** (par exemple un panneau en bois mélaminé). De tels poteaux multi-départ connus sont montrés sur les figures 3a et 3b. On peut utiliser par exemple le produit connu sous la référence PX8019 de la société SODEM. Il présente quatre rainures longitudinales disposées de manière à permettre l'insertion de panneaux de bois **20** d'épaisseur appropriée à des angles de 90° l'un par rapport à l'autre.

En se reportant à la figure 4, la colonne technique **10** selon l'invention est disposée dans une pièce ou salle **48** séparée par une pluralité de cloisons amovibles **20** soutenues par un poteau central **21** et des poteaux périphériques **22,** sachant que le poteau central **21** et périphériques **22** peuvent être identiques. Bien entendu, plusieurs cloisons amovibles **20** peuvent être alignées et soutenues par l'intermédiaire de poteaux périphériques **22** réparties uniformément pour former plusieurs stands d'exposition, de surfaces variables. La colonne technique **10** dispose d'une ouverture centrale **29** apte à accueillir le poteau central **21.** De plus, la colonne comprend des fentes verticales **49** (quatre fentes sont représentées sur la figure 4) apte à accueillir les cloisons **20** venant en contact avec le poteau central **21.**

Dans le mode de réalisation présenté en figure 5, les cloisons amovibles **20** sont agencées de manière à former quatre stands d'exposition **23, 24, 25, 26** à partir d'une seule colonne technique **10** qui comporte dans son centre le poteau central 21.

Comme visible sur la figure 4, la colonne technique **10** comporte avantageusement des traverses escamotables **30** solidaires au socle **11** de la colonne technique **10,** les traverses **30** présentant une forme permettant de soutenir les cloisons amovibles **20** au niveau de leur base. Les traverses escamotables **30,** bien que solidaires au socle **11,** sont agencées de manière à laisser suffisamment d'espace pour permettre le passage des connexions filaires présentes à l'intérieur de la colonne technique **10.** Comme il sera décrit plus loin, les traverses escamotables **30** de la colonne **10** sont adaptables à tout type de cloison connue, notamment les cloisons fournies par la majorité des prestataires techniques (dénommés prestataires d'installation générale ou prestataire IG). En effet, la longueur et/ou la forme des cloisons normalisées mises à la disposition par les différents prestataires IG ne sont pas totalement identiques, ce qui nécessite en conséquence une légère adaptation des traverses escamotables **30** solidaires de la colonne technique **10.** Les traverses escamotables **30** sont reliées chacune à la colonne technique **10** par une charnière située dans le socle **11** de la colonne (représentée aux figures 6 et 7).
Le poteau central **21** s'insère au centre de la colonne technique **10.** Il peut être fixé dans la colonne **10** à l'aide de moyens de fixation appropriés. Une vue de haut de la colonne technique **10** selon l'invention est représentée en figure 5 ; comme le montre cette figure, la colonne **10** est constituée ici de quatre façades **12** obtenues à partir d'un même profilé en matériau léger, par exemple en matière plastique ou en matière métallique. Dans ce mode de réalisation particulier, la colonne technique **10** permet de distribuer du ou des produit(s) et/ou service(s) dans quatre stands distincts **23, 24, 25, 26** séparés par les cloisons amovibles **20.** Dans d'autres modes de réalisation selon l'invention, et non représentés sur les figures, la colonne technique **10** peut être utilisée pour former deux façades, en position « côte à côte ».
Les façades **12** de la colonne **10** comprennent chacune des moyens de gestion et de distribution de produit(s) et/ou de service(s) pour distribuer des produits ou services provenant de réseaux de distribution physiques tels que par exemples des moyens de distribution d'énergie électrique par une sortie électrique, des moyens de distribution de service(s) de télécommunication comme une sortie connectée à un réseau informatique de type réseau de communication par réseaux filaires (fibre optique ou autre) avec protocole de communication par exemple de type TCP/IP, réseau de communication par ondes hertziennes ou autres types d'ondes électromagnétiques avec protocole de communication par exemple de type TCP/IP, ou réseau de communication par courant porteur.

A titre illustratif, et tel que mieux visible en figure 5, la colonne technique **10** selon l'invention peut comprendre quatre façades **12** identiques. Comme montré sur la figure 6 (sur laquelle seulement deux des quatre façades sont visibles) les façades **12** reposant toutes sur un socle **11** commun ; comme indiqué ci-dessus, la colonne technique **10** selon l'invention peut aussi comporter deux ou, trois façades **12** (et de préférence autant de traverses escamotables **30**), mais le mode de réalisation avec quatre façades **12** est préféré car il offre le plus grand degré de polyvalence pour l'implantation des cloisons **20.**

Chacune de ces façades **12** comprend au moins une (et de préférence deux) prises électriques **13** pour la distribution d'énergie en monophasé, chaque prise étant reliée à son coupe-circuit ou disjoncteur **18,** et au moins une prise de connexion réseau **15** de type DB xx, et/ou RJ45, RJ11. La colonne technique **10** selon l'invention peut en effet supporter une multitude d'appareils électriques, informatiques, téléphoniques, tels que des interrupteurs, prises de courants, prises pour téléphones, prises de raccordement informatiques, ou encore des prises de connexion réseau.

La colonne technique **10** selon l'invention peut comporter également un système électronique de gestion et de distribution d'information, de produit(s) et/ou de service(s), par exemple un système tel que décrit dans la demande WO 03 / 060 840 A1, permettant de contrôler et réguler la consommation énergétique de chaque stand d'exposition. Ce système, qui est de préférence un système autonome, est accessible par des moyens de connexions entre l'utilisateur et la colonne technique via une carte dite interface homme-machine (IHM). Ainsi, la colonne technique **10** selon l'invention permet, via un système électronique de gestion d'informations et de distribution de produit(s) et/ou de service(s) de télécommunication(s) de contrôler la distribution des services commandés en l'occurrence la distribution d'énergie.

Dans un mode de réalisation, une des façades se distingue des autres en ce qu'elle comporte un bouton de commande qui actionne un organe de coupure générale, qui est avantageusement caché par un couvercle **14.** Cet organe de coupure, agit sur l'alimentation électrique de toutes les façades de la colonne **10.** Dans un mode de réalisation avantageux ce bouton de commande coopère avec une bobine à émission MX associée à tous les disjoncteurs de la colonne **10** : lorsque l'organe de coupure est actionné (i.e. le bouton pressé) un circuit électrique se ferme et la bobine à émission MX déclenche tous les disjoncteurs auxquels elle est reliée. Cet organe de coupure générale permet à un technicien de couper à partir d'une façade **12** l'alimentation de toutes les prises électriques **13** de la colonne, lors qu'il doit effectuer une intervention sur la colonne **10.**

Les façades **12** de la colonne technique **10** sont en partie recouvertes d'une coque **19.** Cette dernière peut être fabriquée par rotomoulage d'une matière plastique appropriée, ou par toute autre technique appropriée. Le socle **11** de la colonne technique comporte également des moyens de connexion, tels que des prises de distribution. La colonne technique **10** représentée sur la figure 6 comprend également des roulettes **35** disposées en partie dans le socle **11.** Dans un mode de réalisation avantageux il s'agit d'une pluralité (par exemple d'une paire) de roulettes **35** disposés d'un côté de la colonne **10,** qui permettent à un opérateur de déplacer la colonne **10** en l'inclinant légèrement en direction du côté sur lequel se situent les roulettes **35.** A cette fin la colonne technique **10** peut être pourvue d'une poignée **60** qui sera décrit ci-dessous.

Une traverse escamotable **30** est représentée sur les figures 6 ou 7, en position dépliée. Cette traverse escamotable **30** peut s'escamoter dans la colonne technique **10** à l'aide d'une charnière qui se situe au niveau des encoches **31** comprises dans le socle **11** entre deux façades **12** et qui se prolongent vers le haut par des fentes **49** séparant les façades **12** entre elles. Ainsi la traverse **30** peut se ranger dans ladite fente **49** verticale entre deux façades **12.** Ces encoches **31** et fentes **49** permettent également l'emboitement et le maintien des cloisons amovibles **20** lorsque les traverses escamotables **30** sont en position dépliée. Les traverses escamotables **30** de la colonne technique sont constituées d'un profilé, de préférence un alliage léger, par exemple en aluminium. Les traverses escamotables **30** comprennent chacune une rainure longitudinale **32** apte à venir en prise avec la partie inférieure des cloisons amovibles **20.** Dans un mode de réalisation avantageux, chacune des traverses escamotables **30** présente une section transversale ayant un contour extérieur de forme générale rectangulaire, section qui va en se rétrécissant de la partie basse, i.e. de la partie en vis-à-vis avec le sol de la pièce **48,** à la partie haute, i.e. la partie venant en prise avec les cloisons amovibles **20.** On peut fabriquer ces traverses **30** à partir de traverses standard de type connu pour le montage de stands d'exposition.

Chaque traverse escamotable **30** peut être munie d'une ou plusieurs embases **47,** comme c'est visible sur la figure 4 ; Ces embases **47** sont destinées à reposer sur le sol ; elles sont de préférence réglables en hauteur.

L'intérieur de la colonne technique **10** selon l'invention comprend une ossature **37** formée par des closions radiales **38** (appelées aussi ici voiles) disposées en étoile et délimitant plusieurs compartiments permettant le montage d'un ou plusieurs boitiers d'appareillages électriques, et cela directement sur les cloisons radiales **38.** A titre d'illustration, et en se reportant aux figures 7 et 8, la colonne technique comporte une ossature **37** constituée de quatre cloisons radiales **38** définissant entre elles quatre compartiments **39, 40, 41, 42.** Les compartiments comprennent indépendamment les uns des autres des appareils électriques distribuant de l'énergie et/ou des informations et/ou des supports pour chaque façade **12** de la colonne technique **10.** Les boitiers d'appareillages électriques peuvent être fixés sur les cloisons radiales **38** par encliquetage ou par vissage.

Les traverses escamotables **30** peuvent pivoter grâce à des moyens d'articulation **34** qui comportent avantageusement des charnières et des tiges d'articulation situées sur chaque côté du socle **11** et permettant auxdites traverses **30** de pivoter d'un angle d'environ 100° dans le sens contraire aux aiguilles d'une montre (ou vice versa) autour d'un axe de rotation Δ (cf. figure 9). Ainsi, les traverses escamotables **30** peuvent aisément passer d'une position repliée (escamotée), chaque traverse **30** est alors contenue dans un plan perpendiculaire à celui du socle **11,** à une position dépliée, chaque traverse escamotable **30** étant alors contenue dans le plan du socle **11.** Le pivotement des traverses escamotable **30** est réalisé par la présence de trous de fixation réalisés sur les paires de charnières reliés par une tige d'articulation **34.** Le socle **11** comprend également une pluralité d'ouvertures permettant l'insertion des câbles de connexion externe aux différents appareillages électriques compris dans la colonne technique.

En se reportant à la figure 9, le socle **11** de la colonne technique **10** comprend des pièces de support de cloisons (pattes de fixation) **43** permettant de fixer d'autres composants électrotechniques, et des équerres de stabilisation **44** permettant de fixer et maintenir les coques **19** sur le socle **11.** Le socle **11** comprend en outre des passes-câbles **45** permettant d'ordonner et de contenir l'ensemble des connexions filaires présentes à l'intérieur de la colonne technique **10.** Ces passe-câbles **45** forment un tunnel capable de faire circuler les câbles à partager entre les compartiments associés aux façades, malgré le faible espace disponible. Leur face supérieure est de préférence horizontale.

Alternativement ou en plus, la colonne technique **10** peut comporter des embases **46** escamotables et/ou de hauteur réglable, et/ou des roulettes **35.**

Dans un mode de réalisation très avantageux, le socle **11** comprend une pluralité de roulettes **35** libres, qui peuvent être montées par emboîtement sur un corps de support **36,** afin de faciliter le transport de la colonne technique. Afin de stabiliser la colonne technique **10** sur son lieu d'implantation, ces roulettes **35** peuvent être munis d'un système d'escamotage, par actionné par exemple par des vis, et/ou par un moyen de blocage (non montré sur les figures).

L'ossature **37** de la colonne technique est avantageusement réalisée en matière métallique tel que l'aluminium ; les façades **12** et les coques **19** peuvent avantageusement être réalisées en matière plastique ou en matière métallique.

Dans un mode de réalisation, la façade **12** peut être couverte totalement ou partiellement par un couvercle amovible (non montré sur les figures) qui cache et protège ses parties fonctionnelles dans le cas où la façade **12** n'est pas mise en service. Cette situation peut se présenter lorsque qu'une colonne technique **10** comportant quatre façades **12** est utilisée pour délimiter moins que quatre stands : ainsi un stand peut comporter deux façades **12,** dont l'une ne sera peut-être pas mise en service, ou une façade **12** peut déboucher sur une allée de circulation et on peut souhaiter de la protéger du risque d'être dégradé par le mouvement de passage des visiteurs. Ledit couvercle peut aussi avoir une fonction décorative et/ou être un support de publicité.

La colonne technique **10** selon l'invention présente ainsi de nombreux avantages, notamment pour son utilisation dans des salons évènementiels ou d'expositions, et cela aussi bien pour les utilisateurs que les gestionnaires. En effet, la relative compacité de la colonne technique **10** permet de récupérer de la surface utile pour les utilisateurs, ce qui est particulièrement avantageux dans des salons ou le prix du mètre carré devient de plus en plus cher. Cette compacité est liée en partie au fait que ladite colonne **10** agit comme colonne centrale d'un assemblage de cloisons **20** qu'elle tient en place grâce au traverses escamotables **30** et aux encoches **31** et fentes verticales **49** aménagées dans la colonne **10** entre deux façades **12.**

Un autre avantage de la colonne technique **10** selon l'invention réside dans sa polyvalence quant au nombre de cloisons **10** qu'elle supporte : cela permet de n'approvisionner qu'un seul modèle de colonne technique **10** pour tout un hall d'exposition.

Dans un mode de réalisation particulier la colonne technique **10** selon l'invention est munie de moyens d'affichage pour visualiser le paramétrage de la puissance électrique qui a été réservée par l'utilisateur (par exemple en unités de kW) ; avantageusement ce moyen d'affichage affiche également un dépassement de cette puissance électrique et le système est configuré de manière à permettre un dépassement temporaire de la puissance maximale réservée (par exemple pour faire marcher un aspirateur). Ledit moyen d'affichage (non montré sur les figures) peut être constitué par un ou plusieurs voyants (LED) ou par un écran. On peut également prévoir un module de communication en champ (notamment basé sur la technologie RFID) permettant par exemple à l'utilisateur d'afficher les données de consommation et/ou de réservation de services sur les moyens d'affichage d'un dispositif qui lui est propre, par exemple sur son téléphone portable ou sa tablette graphique.

Dans un mode de réalisation particulier la colonne technique **10** selon l'invention permet à chaque utilisateur de la façade **12** d'observer aisément en temps réel sa consommation en énergie via un système électronique de gestion d'information embarqué dans la colonne technique **10** pour ainsi gérer de manière optimale sa consommation électrique.

Nous décrivons maintenant le système d'adaptation aux différentes longueurs et/ou hauteurs de traverses. Il s'agit de manière préférée d'un système d'articulation et de réglage des traverses, représenté de manière schématique sur la figure 10. Il comprend une platine de réglage **34** qui coopère avec une pièce en « U » **112** dont les deux bras parallèles (typiquement réalisées en tôle pliée) prennent ladite platine de réglage **34** en pince, comme cela est montré sur la figure 10b. Ladite pièce en « U » est fixée à une extrémité de la traverse **30**. Ladite platine **34** comprend des évidements **100**,**101** dans lesquels s'insère au moins une tige transversale **110**, **111** reliée aux deux bras parallèles de la pièce en « U » **112**.

Plus précisément, et comme montré sur la figure 10a, ladite platine de réglage **34** est une pièce plate de forme globalement rectangulaire ou allongée, présentant un sens long (abrégé EL) et un sens court (abrégé EC). Elle comprend deux évidements **100**,**101**, de même forme typiquement en « T » ou en « L » ou présentant une combinaison des deux, ou encore en «X». Les largeurs L1,L3 (voir figure 10a) n'ont pas besoin d'être identiques, compte tenu de la fonction des évidements **100**,**101** d'être traversés par une tige transversale **110**, **111**. Chacun des deux évidements **100**,**101** comprend une zone centrale allongée **102**, **103**, dans une direction D1 parallèle ou sensiblement parallèle, ou au moins diagonale, au sens court EC, et chacune de ces zones centrales **102**,**103** présente à chacune des deux extrémités une zone périphérique **104**,**105** ; **106**,**107** allongée dans une direction D2 parallèle ou sensiblement parallèle, ou au moins diagonale, au sens long EL ; sachant que pour chaque évidement **100**,**101** la direction de la zone centrale allongée **102**,**103** ne doit pas coïncider avec celle de chacune des zones périphériques **104**,**105**; **106**,**107**, sachant que les direction de chacune des zones périphériques **105**,**106**; **107**,**109** peuvent être parallèles, comme sur la figure 10a, et/ou les direction des zones centrales allongées **102**,**103** peuvent être parallèles (comme montré sur la figure 10a).

Par un mouvement relatif, dans l'axe de la traverse **30** et dans le sens orthogonal à cet axe, on peut ajuster la position de la pièce en « U » **112** par rapport à la platine **34**; une desdites tiges transversales peut être un boulon **110** permettant de figer la position relative de la platine de réglage **34** et de la pièce en « U » ; l'autre tige **111** transversale peut être un pion de positionnement ou encore un boulon. Ledit boulon **110** est avantageusement du même type que ceux utilisés habituellement pour monter les stands avec le système de poteaux, traverses et cloisons selon l'état de la technique, permettant d'utiliser les mêmes outils.

L'autre extrémité de ladite platine **34** comporte un orifice **108** dans lequel s'insère un autre axe transversal **109**. Cet axe transversal **109** est fixé en bas du socle **11** de la colonne technique **10**, comme cela est montré sur la figure 10c. L'axe **109** permet d'escamoter ladite platine **34** avec la traverse **30** qui y est attachée par l'intermédiaire de ladite pièce en « U » **112**.

Comme montré en détail sur les figures 10d, 10e, 10f et 10g, le système d'articulation et de réglage selon l'invention permet d'ajuster, dans une certaine mesure, la longueur effective et la hauteur de la traverse **30** par un mouvement relatif entre la platine de réglage **34** et la pièce en « U » **112.** Plus précisément, il est possible de choisir entre quatre positions extrêmes qui se distinguent, pour une hauteur X de la traverse **30** donnée, par leur hauteur H de son bord supérieur (et donc par l'espace E entre le sol et le bord inférieur de la traverse **30**) et par leur écartement latéral P entre deux points de repère dans l'axe de la traverse **30.**

Ainsi, en choisissant convenablement les dimensions H2, L2, L3, L4 et L5 des évidements **100,101** de la platine **34,** le système d'articulation et de réglage selon l'invention permet de s'adapter aux situations qui se rencontrent dans la pratique en Europe :
(a) Longueur 945 mm / Hauteur (H) 45 mm ;
(b) Longueur 940 mm / Hauteur (H) 60 mm ;
(c) Longueur 954 mm / Hauteur (H) 45 mm ;
(d) Longueur 954 mm / Hauteur (H) 60 mm ;
et cela sans changer la traverse **30.**

Dans une variante on peut réaliser la platine de réglage **30** avec un seul évidement **100,** mais cette variante est moins préférée car la stabilité mécanique d'un tel système de réglage et d'articulation n'est pas satisfaisante.

Dans un mode de réalisation non montré sur les figures, les traverses peuvent être démontables.

L'utilisation de la colonne technique selon l'invention est très facile, tant pour le montage mécanique que pour le branchement électrique. Un procédé de montage d'un stand d'exposition comprenant au moins une colonne technique selon l'invention, au moins un poteau et au moins une cloison, comprend typiquement les étapes suivantes :
(a) on positionne ladite colonne technique sur un sol horizontal ;
(b) on positionne un poteau central dans l'ouverture centrale de ladite colonne technique ;
(c) on positionne une cloison dans une fente verticale de la colonne technique et on solidarise ladite cloison audit poteau central et par rapport à la traverse.

On entend ici par « solidarisation » la fixation sans degré de liberté, ni en rotation ni en translation (sauf à exercer une force qui ne correspond plus à l'usage normal d'un stand d'exposition).

Si ladite traverse est dotée d'une rainure horizontale, on positionne à l'étape (c) le chant inférieur de la cloison dans la rainure de la traverse. Si ledit poteau central est doté d'une rainure verticale on positionne l'étape (c) un chant vertical dans une rainure verticale dudit poteau central.

Si la traverse est une traverse escamotable **30**, elle doit être abaissée avant l'étape (c), et sa hauteur et/ou longueur doit éventuellement être adaptée aux dimensions des éléments de cloison **20** standard et/ou des traverses standard disponibles, de préférence à l'aide du système d'adaptation de la longueur et/ou de la hauteur décrit ci-dessus.

La colonne technique **10** selon l'invention peut comprendre une poignée amovible **60,** telle que représentée en figures 11a, 11b et 11c, qui s'insère dans l'ouverture centrale **29.** La poignée mobile **60** une fois fixée sur la colonne technique **10** se présente avantageusement parallèlement à l'axe des roulettes **35.** La poignée amovible **60** est fixée sur la colonne technique avantageusement par clipsage sur des brides afin de faciliter la manipulation du dispositif. Cette poignée amovible **60** relie entre elles les extrémités supérieures de la colonne technique **10** pendant le transport. La poignée amovible **60** est adaptable aussi bien pour les colonnes techniques **10** présentant quatre façades **12,** que pour les colonnes **10** à deux façades **12.** La poignée amovible **60,** telle que représentée en figure 11a, comporte une pièce de préhension **61** fixée sur un arceau **62** sensiblement en forme de « U » dont la base est elle-même fixée à un plateau circulaire **63** au moyen d'un boulon **64** ou tout autre organe de fixation. Le plateau circulaire **63** est de diamètre sensiblement égal à celui d'un poteau multi-départ central **21** afin de pouvoir insérer aisément ladite poignée **60** dans l'ouverture centrale **29** lorsque l'utilisateur veut insérer la poignée amovible pour transporter la colonne technique **10.** Le plateau circulaire **63** est avantageusement solidarisé sur la colonne technique **10** par des voiles **65** situées directement sous ledit plateau circulaire **63.** Tel que mieux représenté en figures 11b et 11 c, le plateau circulaire **63** comprend des évidements étant aptes à coopérer chacun avec des brides hautes **66** positionnées sur les faces internes supérieures de chaque façade **12** de la colonne technique. Ces évidements permettent le passage des brides hautes **66** à travers le plateau circulaire **63.** Par un mouvement de rotation autour de l'axe central de la colonne technique **10,** la poignée amovible **60** est verrouillée sur la colonne technique **10,** ce qui par ailleurs permet de présenter ladite poignée **60** parallèlement à l'axe des roulettes **35.** Ces brides hautes **66** sont fixées sur la colonne technique au moyen de boulon **67** ou tout autre organe de fixation.

Les figures 12 montrent une conception alternative de la poignée amovible **60** qui correspond à un mode de réalisation préféré. Dans ce système, et comme cela est montré sur la figure 12a, chaque façade **12** est munie d'une bride ou embase **66a,66b,66c,66d** laquelle supporte un pion **80a,80b,80c,80d.** Chaque embase **66a,66b,66c,66d** possède une semelle **12** réalisée par exemple en matériau élastomère, qui permet un petit débattement radial entre chaque siège et la façade **12** qui le supporte. Le pion **80a,80b,80c,80d** présente un fût **82,** s'étendant à partir de l'embase **66,** prolongé par une tête supérieure **83** de plus grande section transversale que ledit fût **82.**

La poignée **84** de ce mode de réalisation diffère de celle de la figure 11a, d'abord en ce que le plateau **63** présente une structure différente. En effet, ce plateau **63** est creusé de différentes lumières périphériques **85,** dites principales, en l'occurrence prévues au nombre de quatre. Chaque lumière principale **85** présente un tronçon **86** sensiblement circulaire, prolongé par un tronçon rectiligne **87** de plus petite section transversale que le tronçon circulaire **86.** Comme cela est montré sur la figure 12b, la dimension transversale du tronçon circulaire **86** est supérieure à celle de la tête **83** du pion **80,** de sorte que cette tête **83** peut pénétrer librement dans ce tronçon **86.** En revanche, la dimension transversale du tronçon rectiligne **87** est voisine de celle du fût **82** du pion **80,** de sorte que ce fût **82** peut coulisser dans ce tronçon **87,** mais que la tête **83** vient en butée contre les parois latérales de ce tronçon **87.**

Comme cela est montrés sur la figure 12c, on retrouve en outre d'autres lumières périphériques **90,** dites secondaires, en l'occurrence prévues au nombre de deux. Chaque lumière secondaire **90** est formée par un tronçon sensiblement circulaire **91,** prolongé par une encoche **92.** Enfin le plateau **63** est creusé d'un orifice central **68,** destiné au passage d'une tige **93** entourée par un ressort **94.**

Ces deux lumières périphériques sont utilisés avec une colonne technique selon l'invention qui dispose de deux façades seulement. Alors que pour une colonne technique selon l'invention utilisant quatre façades les roulettes **35** se trouvent disposées au-dessous d'une de ces façades **12,** comme cela est montré sur la figure 6, dans une colonne technique ne disposant que de deux façades **12** les roulettes **35** sont avantageusement décalées de 45° par rapport cette position. La figure 12d montre ces deux positions en mode superposé : les pions **80a,80b,80c,80d** et les brides **66a 66b,66c,66d** correspondent au modèle à quatre façade, les pions **80a', 80b'et** les brides **66a',66b'** au modèle à deux façades.

La poignée **84** de ce mode de réalisation diffère aussi de celle de la figure 11a, également en ce que le plateau **63** ne supporte pas directement la poignée **84.**

En effet, le plateau **63** est solidarisée à un organe intermédiaire **95** (appelé ici « tirette »), comprenant une bande centrale **96,** creusée d'un orifice de passage **97** de la tige **93** précitée. Cette bande centrale **96** est prolongée radialement par deux plages **98a,98b** en forme d'arc de cercle, dont les parois extérieures s'étendant au voisinage du pourtour du plateau **63.** Chaque plage **98a,98b** est creusée de découpes **99,** permettant le passage de la tête **83** des pions **80.** La tirette **95** et le plateau **63** sont solidaires en rotation, à savoir qu'il n'y a pas de degré de liberté mutuel. En revanche, cette tirette **95** et ce plateau **63** présentent un degré de liberté en translation, selon l'axe de la tige **93.** La bande centrale **96** comporte de découpes **124** pour laisser passer les pions **80,** comme cela est montré sur la figure 12i.

De façon avantageuse, comme illustré en figure 12i, la poignée **84** peut être pourvue de deux organes de prise en main, à savoir tout d'abord un organe principal de manutention **120** globale de l'ensemble de la colonne technique **12.** Il est en outre prévu un organe de prise en main secondaire **121,** de dimensions plus réduites, destiné plus particulièrement aux manipulations de la tirette **95,** qui vont être décrites dans ce qui suit.

En service, comme cela est illustré sur la figure 12f, on fait tout d'abord descendre la poignée **84** vers les pions **80,** de sorte que ces derniers viennent en butée contre la face inférieure des plages. Puis si on appuie sur la poignée **84,** le ressort **94** soulève la tirette **95** par rapport au plateau, de sorte que les pions **96** peuvent pénétrer dans les tronçons circulaires **86** des lumières **85** respectives. Puis, l'opérateur fait tourner l'ensemble de la poignée **84** par rapport aux façades **12,** typiquement selon 1/8 de tour dans le sens des aiguilles d'une montre. La tête **83** des pions **80** vient alors en regard des découpes ménagées dans les plages de la tirette, puis pénètre dans ces découpes. Sous l'action du ressort, la tirette redescend, de sorte que le plateau est verrouillé et maintenu en position.

Puis, si on souhaite procéder au déverrouillage l'inverse, on tire la poignée **84** vers le haut de sorte que les têtes **83** des pions **80** sont libérées, à savoir qu'elles ne se trouvent plus en regard des parois des découpes. L'opérateur fait alors tourner la poignée **84** par rapport aux façades **12,** dans le sens opposé à celui décrit ci-dessus, en l'occurrence dans le sens anti-horaire. Les pions se trouvent alors placés dans le tronçon circulaire des lumières, de sorte que l'ensemble de la poignée **84** peut être désolidarisé par rapport aux façades **12,** en le tirant vers le haut.

De façon avantageuse, comme illustré en figure 12j, un plateau auxiliaire **122** peut être intercalé entre le plateau principal et la tirette. Ce plateau auxiliaire **122,** fixe par rapport au plateau principal, est creusée d'échancrures **123,** qui sont complémentaires des lumières ménagées dans le plateau principal. De la sorte, le pourtour de ces échancrures **123** évite tout coincement des pions **80** sur le plateau principal, lors des opérations d'extraction de la poignée par rapport aux façades **12.**

L'invention a de nombreux avantages. Elle simplifie considérablement la gestion du parc de boitiers mobiles de raccordement dans un espace d'exposition, en réduisant le nombre desdits boitiers mobiles et en simplifiant leur branchement au caniveau technique et aux stands. Elle permet l'utilisation des éléments de cloison **20** et des poteaux **21, 22** de format standard, comme ils existent par centaines voire milliers en stock dans chaque parc d'exposition.

Un des avantages essentiels de la colonne technique **10** selon l'invention est qu'elle permet de relier une pluralité de stands aux réseaux par l'intermédiaire d'un seul branchement à l'unité de branchement du caniveau technique dans le sol de la pièce **48** (hall d'exposition). Ce branchement se fait par d'un boitier de raccordement **71** dans lequel terminent les câbles de raccordement contenus en provenance de la colonne technique **10** ; ces câbles de raccordement sont contenus dans une gaine **70.**

Par ailleurs, la colonne technique **10** selon l'invention permet de partager plusieurs composants électroniques pour une pluralité de stands. Plus précisément il s'agit de l'électronique de pilotage nécessaire pour faire fonctionner les services distribués par chaque façade ; il peut s'agir également d'un dispositif de mesure avec autant de canaux que de façades. Peut être également partagé l'électronique de communication de type WIFI ou autre, avec autant de canaux que de façades **12.** Ces systèmes électroniques partagés se trouvent de manière générale dans le bas de la colonne, fixés sur le socle et/ou sur les platines de fixation (appelés voiles ou ailes). Ce partage nécessite un passage de nombreux câbles entre les différents secteurs de la colonne ; ce problème a également été résolu par la présente invention.

Un autre avantage de la colonne technique **10** selon l'invention est la possibilité d'échanger les façades **12** avec leurs modules électroniques en cas de panne ; cela n'interrompt la fourniture des services que pendant une courte durée. Cette possibilité d'échanger les façades **12** est très avantageuse car la colonne technique **10** elle-même, une fois installée, ne peut plus être déplacée ou échangée sans démonter les stands **23,24,25,26** délimités par les cloisons **20** qui prennent naissance dans son poteau central **21.**

Bien évidemment, plusieurs modifications peuvent être apportées au mode de réalisation décrit ci-avant sans pour autant sortir du cadre de l'invention, l'invention n'étant pas limitée par les détails des modes de réalisation et des exemples choisis pour l'illustrer.

## Revendications

1. Colonne technique (10) pour stands d'exposition formés par des cloisons (20) maintenues par des poteaux (21,22) et à leur base par une traverse (30) s'étendant entre deux poteaux (21,22) au niveau du sol, laquelle colonne (10) comprend un socle (11) comportant des connexions filaires, et une pluralité de façades (12) individuelles comprenant chacune des moyens de gestion et de distribution de produit(s) et/ou de service(s) permettant de distribuer à chaque stand d'un groupe de stands (23,24,25,26) des produits ou services provenant de réseaux de distribution physiques,
ladite colonne (10) étant **caractérisée en ce qu'**elle comprend au moins une traverse (30), possiblement démontable et de préférence escamotable, solidaire au socle (11) de ladite colonne (10), laquelle colonne (10) comprenant en outre une ouverture centrale (29) apte à accueillir un poteau central (21) et au moins une fente verticale (49) apte à accueillir une cloison (20) venant en contact avec ledit poteau central (21) et ladite au moins une traverse (30) solidaire au socle (11), laquelle traverse (30) laissant suffisamment d'espace pour permettre le passage des connexions filaires présentes à l'intérieur de la colonne technique (10).

2. Colonne technique selon la revendication 1, **caractérisée en ce que** lesdites traverses (30) comprennent chacune une rainure longitudinale (32) apte à venir en prise avec la partie inférieure des cloisons amovibles (20).

3. Colonne technique (10) selon l'une quelconque des revendications 1 ou 2, **caractérisée en ce qu'**elle comprend un système d'adaptation de la longueur et/ou de la hauteur de ladite au moins une traverse (30).

4. Colonne technique (10) selon la revendication 3, **caractérisée en ce que** ledit système d'adaptation de la longueur et/ou de la hauteur de ladite au moins une traverse (30) comprend une platine de réglage (34) qui coopère avec une pièce en « U » (112) dont les deux bras parallèles prennent ladite platine de réglage (34) en pince, ladite platine de réglage (34) comprenant deux évidements (101,102) dans lesquels s'insère au moins une tige transversale (110,111) reliée aux deux bras parallèles de ladite pièce en « U ».

5. Colonne technique (10) selon la revendication 4, **caractérisée en ce que** les deux évidements (100,101) comprennent une zone centrale allongée (102, 103) comprenant à chacune des deux extrémités une zone périphérique (104,105 ; 106,107), étant entendu que pour chaque évidement (100,101) la direction de la zone centrale allongée (102,103) ne coïncide pas avec celle de chacune des zones périphériques (104,105 ; 106,107).

6. Colonne technique (10) selon l'une quelconque des revendications 4 ou 5, **caractérisée en ce que** ladite platine (34) comporte en outre un second axe transversal permettant d'escamoter ladite platine avec ladite au moins une traverse (30) attachée par l'intermédiaire de ladite pièce en « U ».

7. Colonne technique (10) selon l'une quelconque des revendications 1 à 6, **caractérisée en ce que** le socle (11) de ladite colonne comprend des passes-câbles formant des tunnels (45) permettant d'ordonner, de contenir et de faire circuler l'ensemble des connexions filaires présentes à l'intérieur de la colonne technique (10).

8. Colonne technique (10) selon l'une quelconque des revendications 1 à 7, **caractérisée en ce que** la colonne technique (10) comprend une ossature (37) formée par des closions radiales (38) disposées en étoile et délimitant plusieurs compartiments pour le montage d'un ou plusieurs boitiers d'appareillages électriques.

9. Colonne technique (10) selon l'une quelconque des revendications 1 à 8, **caractérisée en ce que** chacune de ces façades (12) comprend au moins une prise électrique (13), de préférence deux prises électriques, pour la distribution d'énergie en monophasé, chaque prise étant reliée à un coupe-circuit ou disjoncteur (18), et au moins une prise de connexion réseau (15) de type DB xx, et/ou RJ45, RJ11.

10. Colonne technique (10) selon l'une quelconque des revendications 1 à 9, **caractérisée en ce qu'**elle comprend en outre une poignée amovible (60, 84) apte à être fixée de manière réversible, ladite poignée (60, 84) étant fixées sur la colonne au moyen d'au moins une bride (66) disposée sur la face interne d'au moins une façade (12) de ladite colonne.

11. Colonne technique (10) selon la revendication 10, **caractérisée en ce que** ladite poignée amovible (60, 84) est fixée sur la bride (66) à l'aide de pions (80), lesdits pions (80) étant fixés sur ladite bride (66), lesdits pions présentant chacun un fût (82) supportant une tête (83) et coopèrent chacun avec une lumière (85) aménagée dans une plaque supportant ladite poignée (60,84), ladite lumière (85) présentant un tronçon circulaire (86) de diamètre suffisant pour faire passer la tête (83) dudit pion (80) et un tronçon rectiligne (87) d'un diamètre suffisant pour accueillir le fût (82) dudit pion (80) en bloquant la tête (83) du pion (80) suite à un mouvement de rotation de ladite poignée (60,84).

12. Stand d'exposition assemblé à partir d'au moins une colonne technique (10) selon l'une quelconque des revendications 1 à 11, une pluralité de cloisons (20) verticales et une pluralité de poteaux (21,22), **caractérisé en ce que** :
- chaque colonne technique (10) comprend dans son ouverture centrale (29) un poteau central (21), et comprend au moins deux traverses (30) solidaires au socle (11), et comprend au moins deux fentes verticales (49) aptes à accueillir une cloison (20) venant en contact avec le poteau central (20),
- au moins deux cloisons (20) verticales traversent chacune une fente verticale (49) de la dite colonne technique (10) et sont solidarisées audit poteau central (21) chacune à une desdites traverses (30).

13. Utilisation de la colonne technique (10) selon l'une quelconque des revendications 1 à 11 dans une pièce ou une salle (48), telle qu'un hall d'exposition, séparée par une pluralité de cloisons amovibles (20) soutenues par un poteau central (21) et au moins un poteau périphérique (22).

14. Utilisation selon la revendication 13, dans laquelle ladite colonne technique (10) comporte dans son ouverture centrale (29) un poteau central (21).

15. Procédé de montage d'un stand d'exposition comprenant au moins une colonne technique (10) selon l'une quelconque des revendications 1 à 11, au moins un poteau (21,22) et au moins une cloison (20), ledit procédé comprenant les étapes suivantes :
(a) on positionne ladite colonne technique (10) sur un sol horizontal ;
(b) on positionne un poteau central (21) dans l'ouverture centrale (29) de la dite colonne technique (20) ;
(c) on positionne une cloison (20) dans une fente verticale (49) de la colonne technique (10) et on solidarise ladite cloison audit poteau central (21) et par rapport à la traverse (30).

## Patentansprüche

1. Versorgungssäule (10) für Messestände, die von Wänden (20) gebildet sind, die von Ständern (21, 22) und an ihrer Basis von einem Querträger (30), der sich zwischen zwei Ständern (21, 22) im Bereich des Bodens erstreckt, gehalten werden, wobei die Säule (10) einen Sockel (11) umfasst, der Drahtverbindungen umfasst, und eine Vielzahl individueller Fassaden (12), die jeweils Mittel zum Verwalten und Verteilen von Produkt(en) und/oder Dienstleistung(en) umfassen, die es erlauben, zu jedem Stand einer Gruppe von Ständen (23, 24, 25, 26) Produkte oder Dienstleistungen, die von physischen Verteilungsnetzwerken kommen, zu verteilen,
wobei die Säule (10) **dadurch gekennzeichnet ist, dass** sie mindestens einen Querträger (30) umfasst, der möglicherweise demontierbar und bevorzugt versenkbar ist, der fest mit dem Sockel (11) der Säule (10) verbunden ist, wobei die Säule (10) außerdem eine zentrale Öffnung (29) umfasst, die geeignet ist, um einen zentralen Ständer (21) aufzunehmen, und mindestens einen vertikalen Schlitz (49), der geeignet ist, um eine Wand (20), die mit dem zentralen Ständer (21) in Berührung kommt, und den mindestens einen Querträger (30), der mit dem Sockel (11) fest verbunden ist, aufzunehmen, wobei der Querträger (30) ausreichend Raum lässt, um das Durchgehen der Drahtverbindungen, die im Inneren der Versorgungssäule (10) vorliegen, zu erlauben.

2. Versorgungssäule nach Anspruch 1, **dadurch gekennzeichnet, dass** die Querträger (30) jeweils eine Längsrille (32) umfassen, die geeignet ist, um mit dem unteren Teil der abnehmbaren Wände (20) zum Eingriff zu kommen.

3. Versorgungssäule (10) nach einem der Ansprüche 1 oder 2, **dadurch gekennzeichnet, dass** sie ein System zum Anpassen der Länge und/oder der Höhe des mindestens einen Querträgers (30) umfasst.

4. Versorgungssäule (10) nach Anspruch 3, **dadurch gekennzeichnet, dass** das System zum Anpassen der Länge und/oder der Höhe des mindestens einen Querträgers (30) eine Einstellplatte (34) umfasst, die mit einem Teil in "U"-Form (112) zusammenwirkt, dessen zwei parallele Schenkel die Einstellplatte (34) in die Klemme nehmen, wobei die Einstellplatte (34) zwei Aussparungen (101, 102) umfasst, in welche sich mindestens ein Querschaft (110, 111), der mit den zwei parallelen Schenkeln des Teils in "U"-Form verbunden ist, einfügt.

5. Versorgungssäule (10) nach Anspruch 4, **dadurch gekennzeichnet, dass** die zwei Aussparungen (100, 101) eine gestreckte zentrale Zone (102, 103) umfassen, die an jedem ihrer zwei Enden eine periphere Zone (104, 105; 106, 107) umfasst, wobei für jede Aussparung (100, 101) die Richtung der gestreckten zentralen Zone (102, 103) nicht mit der jeder der peripheren Zonen (104, 105; 106, 107) zusammenfällt.

6. Versorgungssäule (10) nach einem der Ansprüche 4 oder 5, **dadurch gekennzeichnet, dass** die Platte (34) außerdem eine zweite Querachse umfasst, die es erlaubt, die Platte mit dem mindestens einen Querträger (30), der über das Teil in "U"-Form angebracht ist, zu versenken.

7. Versorgungssäule (10) nach einem der Ansprüche 1 bis 6, **dadurch gekennzeichnet, dass** der Sockel (11) der Säule Kabeldurchführungen umfasst, die Tunnel (45) bilden, die es erlauben, sämtliche Drahtverbindungen, die im Inneren der Versorgungssäule (10) vorliegen, zu ordnen und zu enthalten und zirkulieren zu lassen.

8. Versorgungssäule (10) nach einem der Ansprüche 1 bis 7, **dadurch gekennzeichnet, dass** die Versorgungssäule (10) ein Gestell (37) umfasst, das von radialen Wänden (38) gebildet ist, die sternförmig angeordnet sind und mehrere Fächer für die Montage eines oder mehrerer elektrischer Gerätegehäuse abgrenzen.

9. Versorgungssäule (10) nach einem der Ansprüche 1 bis 8, **dadurch gekennzeichnet, dass** jede dieser Fassaden (12) mindestens eine Stromsteckdose (13), bevorzugt zwei Stromsteckdosen für die einphasige Stromverteilung umfasst, wobei jede Steckdose mit einem Stromunterbrecher oder Überlastschalter (18) und mindestens einem Netzwerkverbindungsanschluss (15) vom Typ DB xx und/oder RJ45, RJ11 verbunden ist.

10. Versorgungssäule (10) nach einem der Ansprüche 1 bis 9, **dadurch gekennzeichnet, dass** sie außerdem einen abnehmbaren Griff (60, 84) umfasst, der angepasst ist, um umkehrbar befestigt zu sein, wobei der Griff (60, 84) auf der Säule mittels eines Flanschs (66) befestigt ist, der auf der Innenfläche mindestens einer Fassade (12) der Säule angeordnet ist.

11. Versorgungssäule (10) nach Anspruch 10, **dadurch gekennzeichnet, dass** der abnehmbare Griff (60, 84) auf dem Flansch (66) mit Hilfe von Zapfen (80) befestigt ist, wobei die zapfen (80) auf dem Flansch (66) befestigt sind, wobei die Zapfen jeweils einen Schaft (82) aufweisen, der einen Kopf (83) trägt und jeweils mit einem Langloch (85) zusammenwirkt, das in einer Platte eingerichtet ist, die den Griff (60, 84) trägt, wobei das Langloch (85) einen kreisförmigen Abschnitt (86) mit einem Durchmesser aufweist, der ausreicht, um den Kopf (83) des Zapfens (80) durchgehen zu lassen, und einen geradlinigen Abschnitt (87) mit einem Durchmesser, der ausreicht, um den Schaft (82) des Zapfens (80) aufzunehmen, indem der Kopf (83) des Zapfens (80) im Anschluss an eine Drehbewegung des Griffs (60, 84) blockiert wird.

12. Messestand, der ausgehend von mindestens einer Versorgungssäule (10) nach einem der Ansprüche 1 bis 11, einer Vielzahl vertikaler Wände (20) und einer Vielzahl von Ständern (21, 22) zusammengefügt wird, **dadurch gekennzeichnet, dass**:
- jede Versorgungssäule (10) in ihrer zentralen Öffnung (29) einen zentralen Ständer (21) umfasst, und mindestens zwei Querträger (30), die mit dem Sockel (11) fest verbunden sind, und mindestens zwei vertikale Schlitze (49) umfasst, die angepasst sind, um eine Wand (20), die mit dem zentralen Pfosten (20) in Berührung kommt, aufzunehmen,
- mindestens zwei vertikale Wände (20) jeweils einen vertikalen Schlitz (49) der Versorgungssäule (10) durchqueren und fest mit dem zentralen Ständer (21) jeweils an einem der Querträger (30) verbunden sind.

13. Einsatz der Versorgungssäule (10) nach einem der Ansprüche 1 bis 11 in einem Raum oder einem Saal (48) wie einer Messehalle, getrennt von einer Vielzahl abnehmbarer Wände (20), die von einem zentralen Ständer (21) und mindestens einem peripheren Ständer (22) gestützt sind.

14. Einsatz nach Anspruch 13, wobei die Versorgungssäule (10) in ihrer zentralen Öffnung (29) einen zentralen Ständer (21) umfasst.

15. Verfahren zur Montage eines Messestandes, der mindestens eine Versorgungssäule (10) nach einem der Ansprüche 1 bis 11, mindestens einen Ständer (21, 22) und mindestens eine Wand (20) umfasst, wobei das Verfahren die folgenden Schritte umfasst:
(a) Positionieren der Versorgungssäule (10) auf einem horizontalen Boden;
(b) Positionieren eines zentralen Ständers (21) in der zentralen Öffnung (29) der Versorgungssäule (20);
(c) Positionieren einer Wand (20) in einem vertikalen Schlitz (49) der Versorgungssäule (10) und festes Verbinden der Wand mit dem zentralen Ständer (21) und in Bezug auf den Querträger (30).

## Claims

1. Feeder pillar (10) for exhibition stands formed of partitions (20) held by posts (21, 22) and at their base by a crossmember (30) extending between two posts (21, 22) at ground level, which pillar (10) comprises a base (11) comprising wired connections, and a plurality of individual façades (12) each one comprising product and/or service management and distribution means allowing products or services from physical distribution networks to be distributed to each stand of a group of stands (23, 24, 25, 26),
said pillar (10) being **characterised in that** it comprises at least one crossmember (30), possibly removable and preferably retractable, secured to the base (11) of said pillar (10), which pillar (10) further comprising a central opening (29) able to accept a central post (21) and at least one vertical slot (49) able to accept a partition (20) that comes into contact with said central post (21) and said at least one crossmember (30) secured to the base (11), which crossmember (30) leaves enough space to allow the passage of the wired connections present inside the feeder pillar (10).

2. Feeder pillar according to claim 1, **characterised in that** said crossmembers (30) each include a longitudinal groove (32) able to engage with the lower portion of the removable partitions (20).

3. Feeder pillar (10) according to any of claims 1 or 2, **characterised in that** it comprises a system for adapting the length and/or the height of said at least one crossmember (30),

4. Feeder pillar (10) according to claim 3, **characterised in that** said system for adapting the length and/or the height of said at least one crossmember (30) comprises an adjustment plate (34) that cooperates with a "U" shaped part (112) of which the two parallel arms sandwich said adjustment plate (34), said adjustment plate (34) comprising two recesses (101 ,102) wherein is inserted at least one transverse rod (110, 111) connected to the two parallel arms of said "U" shaped part.

5. Feeder pillar (10) according to claim 4, **characterised in that** the two recesses (100, 101) include a central elongated zone (102, 103) that comprises at each one of the two ends a peripheral zone (104, 105; 106, 107), with the understanding that for each recess (100, 101) the direction of the central elongated zone (102, 103) does not coincide with that of each one of the peripheral zones (104, 105; 106, 107).

6. Feeder pillar (10) according to any of claims 4 or 5, **characterised in that** said plate (34) further comprises a second transverse axis that makes it possible to retract said plate with said at least one crossmember (30) attached by the intermediary of said "U" shaped part.

7. Feeder pillar (10) according to any of claims 1 to 6, **characterised in that** the base (11) of said pillar comprises cable glands forming tunnels (45) that make it possible to arrange, contain and allow to circulate all of the wired connections present inside the feeder pillar (10) .

8. Feeder pillar (10) according to any of claims 1 to 7, **characterised in that** the feeder pillar (10) comprises a framework (37) formed of radial partitions (38) arranged in a star and delimiting several compartments for the assembly of one or several electrical apparatus boxes.

9. Feeder pillar (10) according to any of claims 1 to 8, **characterised in that** each one of these facades (12) comprises at least one electrical outlet (13), more preferably two electrical outlets, for the distribution of single-phase power, each outlet being connected to circuit breaker or disconnect switch (18), and at least one network connection jack (15) of the DB xx, and/or RJ45, RJ11 type.

10. Feeder pillar (10) according to any of claims 1 to 9, **characterised in that** it further comprises a removable handle (60, 84) able to be reversibly fixed, said handle (60, 84) being fixed onto the pillar by means of at least one flange (66) arranged on the inner face of at least one façade (12) of said pillar.

11. Feeder pillar (10) according to claim 10, **characterised in that** said removable handle (60, 84) is fixed onto the flange (66) using pins (80), said pins (80) being fixed onto said flange (66), said pins each having a drum (82) supporting a head (83) and each one cooperating with a hole (85) arranged in a plate supporting said handle (60, 84), said hole (85) having a circular section (86) with a diameter that is sufficient to pass the head (83) of said pin (80) and a straight section (87) with a diameter that is sufficient to accept the drum (82) of said pin (80) by blocking the head (83) of the pin (80) following a rotation movement of said handle (60, 84).

12. Exhibition stand assembled from at least one feeder pillar (10) according to any of claims 1 to 11, a plurality of vertical partitions (20) and a plurality of posts (21, 22), **characterised in that**:
- each feeder pillar (10) comprises in its central opening (29) a central post (21), and comprises at least two crossmembers (30) secured to the base (11), and comprises at least two vertical slots (49) able to accept a partition (20) that comes into contact with the central post (20),
- at least two vertical partitions (20) each pass through a vertical slot (49) of said feeder pillar (10) and are secured to said central post (21) each one to one of said crossmembers (30).

13. Use of the feeder pillar (10) according to any of claims 1 to 11 in a room or a hall (48), such as an exhibition hall, separated by a plurality of removable partitions (20) supported by a central post (21) and at least one peripheral post (22).

14. Use according to claim 13, wherein said feeder pillar (10) comprises in its central opening (29) a central post (21).

15. Method for assembling an exhibition stand comprising at least one feeder pillar (10) according to any of claims 1 to 11, at least one post (21, 22) and at least one partition (20), said method comprising the following steps:
(a) positioning said feeder pillar (10) on a horizontal ground;
(b) positioning a central post (21) in the central opening (29) of said feeder pillar (20);
(c) positioning a partition (20) in a vertical slot (49) of the feeder pillar (10) and securing said partition to said central post (21) and with respect to la crossmember (30) .
